# EUROPÄISCHE PATENTSCHRIFT

(11) **EP 2 362 200 B1**
(45) Veröffentlichungstag und Bekanntmachung des Hinweises auf die Patenterteilung: **27.05.2015**
(21) Anmeldenummer: 10154721.4
(22) Anmeldetag: 25.02.2010
(51) Int. Cl.: G01L 1/22, G01L 5/00, G01G 3/14, G01G 19/18, B66C 13/16

(54) **Kraftmess-Hülse sowie Kraftmess-Einrichtung**
Power measurement sleeve and power measurement device
Douille de mesure de force ainsi que de dispositif de mesure de force

(43) Veröffentlichungstag der Anmeldung: 31.08.2011
(73) Patentinhaber: Brosa AG, 88069 Tettnang (DE)
(72) Erfinder:
(74) Vertreter: Wegener, Markus

(56) Entgegenhaltungen:
- EP-A2- 1 471 339
- WO-A1-01/23862
- WO-A1-03/073057
- CH-A5- 679 950
- DE-A1- 19 960 786

## Beschreibung

Die Erfindung bezieht sich auf eine Kraftmess-Hülse nach dem Oberbegriff des Patentanspruches 1 sowie auf eine Kraftmess-Einrichtung nach dem Oberbegriff des Patentanspruches 5.

Aus der DE 102 45 768 B4 ist ein Kraftaufnehmer zum Messen von Achskräften zu entnehmen. Es sollen insbesondere die bei der Umlenkung von Drahtseilen entstehenden radial gerichteten Kräfte ermittelt werden. Das Umlenkrad ist dabei auf einer Achse drehbar gelagert. Die Achse wird von einer Hülse umgriffen, die zwei zueinander beabstandete umlaufende Auflageflächen aufweist, auf denen die innere Lagerschale des Umlenkrades abgestützf ist. Die Krafteinleifung zwischen der Hülse und der Achse erfolgt über Anlageflächen zwischen diesen beiden Bauteilen, die in etwa im äußeren Bereich der Hülse angeordnet sind. Um nunmehr die durch das Umlenkrad eingeleiteten Radialkräfte zu erfassen, ist in die Achse eine umlaufende Nut eingearbeitet, in die Dehnungsmessstreifen eingesetzt sind. Die Nut verläuft dabei seitlich versetzt und senkrecht zu der Anlagefläche zwischen der Hülse und der Achse, so dass die durch die Umlenkrölle eingeleiteten Kräfte die Achse durchbiegen, wodurch in den Nuten geometrische Veränderungen entstehen die von den Dehnungsmessstreifen ausgenommen werden, so dass durch die Widerstandsänderungen der Dehnungsmessstreifen elektrische Signale generiert sind, durch die ermittelbar ist, welche Biegekräfte in die Achse eingeleitet sind.

Solche Kraftaufnehmer zum Messen von Biegekräften in Achsen haben sich in der Praxis zwar bewährt, weisen jedoch den Nachteil auf, dass für jedes Umlenkrad ein solcher Kraftmessnehmer zur Verfügung zustellen ist, denn wenn mehrere Hülsen auf eine Achse aufgesetzt werden, beeinflussen die Biegekräfte von benachbarten Hülsen das Messergebnis wechselweise und verfälschen dieses somit.

Darüber hinaus sind die Kraftübertragungsflächen zwischen dem Umlenkrad und der Hülse sowie zwischen der Hülse und der Achse sowie die in die Achse eingearbeitete Nuten zur Bildung der Messsteifen seitlich zueinander in axialer Richtung versetzt. Dies vergrößert die Länge der Achse und der Hülse, um ausreichend Platz für die Bildung der Kraftübertragungsflächen und die Messstellen zu schaffen, so dass ein erheblicher Platzbedarf für diese Kräftaufnahmen besteht.

Des Weiteren können durch solche Kraftmess-Einrichtungeh lediglich Biegekräfte erfasst werden. Oftmals ist es jedoch wünschenswert, insbesondere bei der Veränderung des Umschlingungswinkels und der damit verbundenen Verschiebung des Krafteinleitungspunktes, der auf die Umlenkrolle einwirkt, auch Kräfte in anderen unterschiedlichen Richtungen zu erfassen, um exakte Ruckschtüsse zu erhalten, aus welcher Richtung und mit welchem Betrag die radialen Kräfte von der Umlenkrolle auf die Kraftmesseinrichtung verlaufen bzw. übertragen sind.

Aus der DE 199 60 786 A1 ist ein Radialkraftaufnehmer mit Krafteinleitungselementen und Kraftaufnahmeelementen bekannt geworden, zwischen denen Verformungskörper mit daran applizierten Dehnungsmessstreifen angeordnet sind.

Die vorstehend aufgeführten Probleme werden durch einen solchen Radialkraftaufnehmer nicht gelöst.

Durch die CH 679950 A5 ist eine Vorrichtung zum Messen von in einer Eisenbahnschiene wirkenden Kräfte beschrieben, die genauso wie die Messdose nach der WO 03/073057 A1 die angesprochenen Nachteile aufweisen.

Aus der EP1471339A2 ist ein Kraftmess-Körper zu entnehmen, der in Umfangsrichtung verlaufende Aussparungen aufweist, die verformbar sind, so dass mit Hilfe von Dehnmessstreifen und einer Auswärtselekfronik die Verformung der jeweiligen Aussparung feststellbar ist um daraus die auf den Kraftmesskörper einwirkenden Kräfte zu errechnen.

Aus der WO 01/23862 A1 ist ein Kraftmesskörper mit entsprechend radial verlaufenden Aussparungen zu entnehmeh, durch den die auf diesen einwirkenden Kräfte ermittelbar sind.

Die durch die vorstehenden Druckschriften offenbarten Kraftmesskörper weisen demnach keine Messstellen auf, durch die Scherkräfte ermittelbar sind. Lediglich radial durch den Kraftmesskörper verlaufende Kräfte können von den jeweiligen Messstellen an den Aussparungen aufgenommen werden, da sich die jeweilige Aussparung ausschließlich dann verformt, wenn solcher Radialkräfte auf diese einwirken.

Es ist daher Aufgabe der Erfindung, sowohl eine Kraftmess-Hülse als auch eine Kraftmess-Einrichtung der eingangs genannten Gattungen bereitzustellen, durch die die Messung von Scherkräften möglich ist.

Diese Aufgabe wird erfindungsgemäß jeweils selbstständig durch die Merkmale der kennzeichnenden Teile der Patentansprüche 1 oder 5 gelöst.

Weitere vorteilhafte Weiterbildungen der Erfindungen ergeben sich aus den Unteransprüchen.

Dadurch, dass in die Kraft-Messhülse die Ausnehmung und die Kraftübertragungsflächen in einer gemeinsamen Ebene angeordnet sind, die senkrecht zu der Längsachse der Kraftmess-Hülse verläuft; ist vorteilhafterweise eine Kraftübertragung sihergestellt, die unmittelbar auf die in den Ausnehmungen angeordneten Dehnungsmessstreifen einwirkt. Durch diese konstruktive Maßnahme wird somit die Krafteinleitung zuverlässig erfasst. Aufgrund der in Umfangsrichtung der Kraftmess-Hülse vorgesehenen Messstellen sowie die Anordnung der Kraftübertragungsftachen können Verschiebungen der radial wirkenden Kräfte gemessen werden.

Da zwischen dem zylindrischen Körper als Achse oder Welle und dem Gestell bzw. dem Umlenkrad die Kraftmess-Hütsen angeordnet sind, können auf dem zylinderförmigen Körper mehrere Kraftmess-Hülsen angebracht sein, so dass die Krafteinteitung von mehreren parallel zueinander verlaufenden Umlenkrollen oder Zahnrädern messbar ist, ohne dass die jeweils dort wirkenden Kräfte die benachbarten Messengen beeinflussen:

Die axiale Bäuraumgröße wird verringert, denn die Kraftübertragungsflächen und die Messstellen, die durch die Ausnehmungen und die Dehnungsmessstreifen entstehen, erstrecken sich nicht parallel zu der Längsachse der Kraftmess-Hülse, sondern vielmehr senkrecht zu dieser; lediglich die radiale Baumraumgröße wird durch diese konstruktive Ausgestaltung vergrößert. Da, jedoch die Lager zur Aufnahme der entsprechenden Radialkräfte oftmals in einem entsprechenden Größenverhältnis zu dimensionieren sind, steht in radialer Richtung genügend Bauraum zur Verfugung.

Aufgrund der unterschiectlichen Anordnungen der Kraftmesshüise sowie deren unterschiedliche konstruktive Ausgestaltungen können verschiedenartige Messprinzipien zur Erfassung von Stauchungen, Biegungen und Scherungen oder dgl. erfasst werden.

in der Zeichnung igt ein Ausführungsbeispiel für die Verwerdung von einer erfindungsgemäßen Kraftmess-Hülse dargestellt, die nachfolgend näher erläutert sind. Im Einzelnen zeigt:

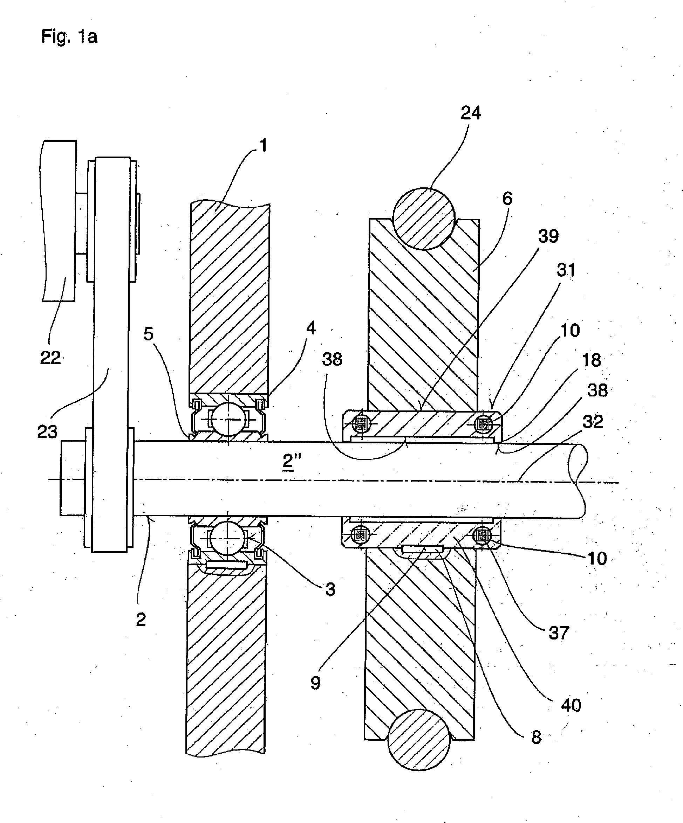

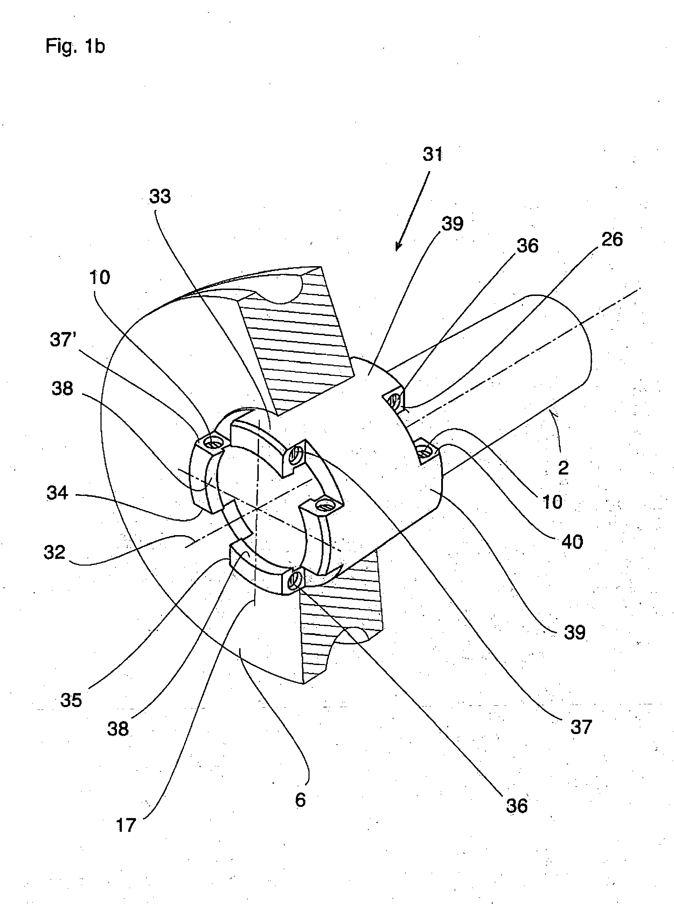

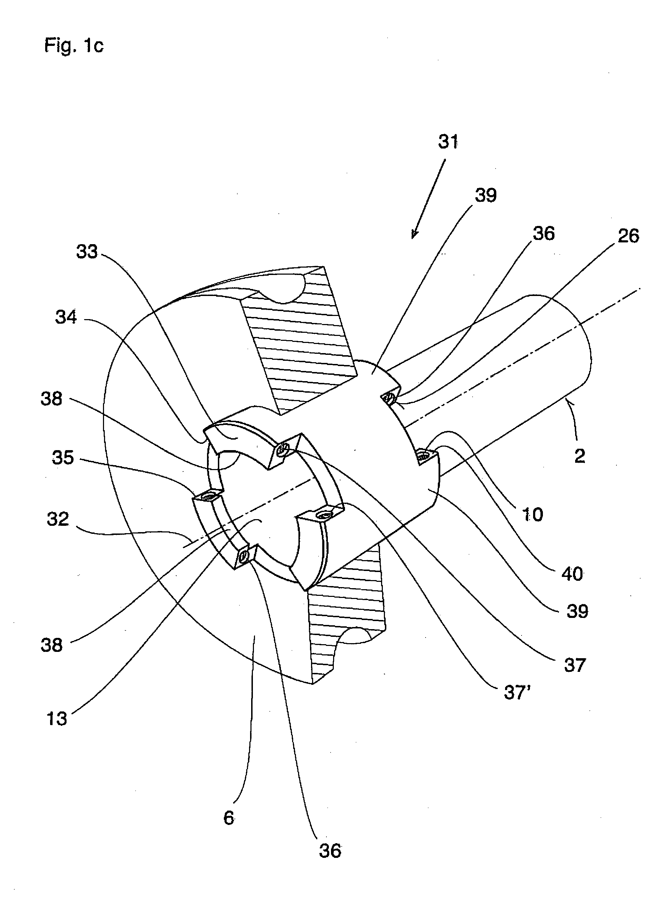

- Figur 1: eine Kraftmess-Einrichtung mit einer Kraftmess-Hülse, die acht in Umfangsrichtung weisende Messstellen aufweist, im Schritt,
- Figur 1b: die Kraftmess-Hülse gemäß Figur 1a in perspektivischer Ansicht und
- Figur 1c: eine Abwandlung der Kraftmess-Einrichtung nach Fig. 1b mit einer Kraftmess-Hülse, die sechs in Umfangsrichtung weisende Messstellen aufweist, im Schnitt.

Eine in den Figuren 1a, 1b und 1c abgebildete Kraftmess-Einrichtung 21 soll die Messung von radial wirkenden Kräften, die beispielsweise über ein auf einem zylinderförmigen Körper 2 gelagerten Umlenkrad 6 ermittelbar sein. Insbesondere bei Umfenkrädern 6, die an Aüslegearmen von Kranen angebracht sind, ist es erforderlich, die anzuhebenden und zu transportierenden Lasten zu ermitteln, um zu verhindern, dass aufgrund von Überfasten der aufgenommenen Bauteile Beschädigungen an dem Kranausleger entstehen und dieser möglicherweise in Richtung des Bodens abknickt und herunterfällt.

Den Figuren 1a und 1b kann eine Kraftmess-Hülse 31 entnommen werden. Die Kraftmess-Hülse 31 weist zwei freie gegenüberliegende Stirnseiten 34 und 35 auf, an denen jeweils vier Ring-Segmente 33 angeformt sind. Die Symmetrieachsen der jeweiligen Ring-Segmente 33 sind 90° voneinander beabstandet. Die Ring-Segmente 33 weisen eine innere und eine äußere Kraftübertragungsfläche 38 bzw. 39 auf. Die innere Kraftübertragungsfläche 38 dient als Zentrierung für eine für den in die Kraftmess-Hülse 31 eingeschobenen zylinderförmigen Körper 2. Es sind demnach mindestens zwei Ringsegmente 33 erforderlich, die fluchtend zueinander gegenüberliegen müssen, um die Zentrierung des aufzunehmenden zylinderförmigen Körpers 2 zu bewerkstelligen.

Wenn drei Ring-Segmente 33 vorgesehen sind, deren Symmetrieachsen beispielsweise um 120° voneinander beabstandet sind entsteht eine optionale Zentrierung. Der erfindungswesentliche Gedanke umfasst jedoch auch die Anordnung von drei oder mehreren Ring-Segmente 33, die in einem beliebigen Winkel zueinander verteilt auf einer Kreisbahn in Umfangsrichtung der Hülse 31 angeordnet sein können. Auch die Auflager 18 der Hülse 11 sind in einem beliebigen Winkel zueinander positionierbar. Durch die Auflager 18 und die Ring-Segmente 33 der jeweiligen Hülse 31 sind die Zentrierungen für einen Körper, eine Achse 2' bzw. eine Weite 2' zu erreichen. Dabei ist mindestens einer der Auflager 18 fluchtend zu einer Ausnehmung 15 und mindestens-eines der Ring-Segmente 33 der Hülse 31 der Ausnehmung 36 zuzuordnen.

Jedes der vier Ring-Segmente 33 weist zwei in Umfangsrichtung verlaufende Stirnflächen 40 auf, in die Jeweils eine Ausnehmung 36 eingeformt ist. Die Ausnehmunggen 36 eines der Ring-Segmente 33 sind exakt fluchtend zueinander ausgerichtet und zentrisch in der Stirnfläche 40 eingearbeitet. Die Innenkontur der Ausnehmung 36 ist rund; diese kann jedoch auch mehreckig ausgestaltet sein.

Auf dem Boden 37 der Ausnehmung 36 sind die Dehnungsmessstreifen 10 befestigt; es ist auch möglich, an der Wand 37 der Ausnehmung 36 die Dehnungsmessstreifen 10 anzubringen.

Der bei radial wirkenden Kräften auftretende Krafffluss ist Figur 1a zu entnehmen. Die von einem Umlenkrad 6 aufzunehmende radial wirkenden Kräfte werden zunächst an die äußere Kraftübertragungsfläche 39 übertragen und laufen durch die Ring-Segmente 33 über die innere Kraftübertragungsfläche 38 auf eine Welle 2". Bei dieser konstruktiven Anordnung der Messstelle 26 sind ausschließlich Scher- und/oder Biegekräfte, die auf die Kraftübertragungs-Hülse 31 einwirken, erfassbar.

Darüber hinaus ist Figur 1a zu entnehmen, dass eine Passfeder 8 und eine Nut 9 zwischen zwei Ring-Segmenten 33 in die Kraftmess-Hülse 31 eingearbeitet ist.

In Figur 1c sind drei einem Winkel von 120° zueinander verlaufende Ring-Segmente 33 abgebildet, durch die innere Kraftübertragungsfläche 38 der drei Ring-Segmente 33 wird eine Anlage geschaffen, die konzentrisch zueinander sind. Daher wirken die inneren Kraftübertragungsflächen 38 gemeinsam als Zentrierung für eine Achse 2' oder Welle 2", die in Form einer Spielpassung eingeschoben ist.

Sowohl die Auflager 18 als auch die Ring-Segmente 33 können in einem beliebigen Winkel zueinander angeordnet sein. Zur korrekten Funktionsweise der Hülse 11 bzw. 31 ist als Mindestanforderung die Voraussetzung zu erfüllen, dass mindestens eine der Ausnehmung 15 mit einem Dehnungsmesstreifen 10 vorhanden ist, zu der ganz oder bereichsweise deckungsgleich eines der Auflager 18 angeordnet ist bzw. dass mindestens zwei Ring-Segmente 33 vorhanden sind, wobei an einer der Ring-Segmente 33 eine Ausnehmung 36 mit einem Dehnungsmessstreifen 10 vorzusehen ist.

## Patentansprüche

1. Kraftmess-Hülse (31) mit mindestens einer inneren und äußeren Kraftübertragungsfläche (38, 39), die konzentrisch zu der Längsadhse (32) der Hülse (31) verlaufen,
**dadurch gekennzeichnet,**
**dass** an den beiden freien Stirnseiten (34, 35) der Hülse (31) mindestens zwei Ring-Segmente (33) angebracht sind, die jeweils konzentrisch zu der Längsachse (32) der Hülse (31) verlaufen und durch die paarweise zueinander konzentrische Kraftübertragungsflächen (38, 39) gebildet sind, dass in die freien in Umfangsrichtung der Hülse (31) weisenden Stirnflächen (40) der Segmente (33), vorzugsweise jeweils zentrisch, eine Ausnehmung (36) eingearbeitet ist und dass an dem Boden (37) und/oder der Wand (37') der jeweiligen Ausnehmung (36) mindestens ein Dehnungsmessstreifen (10) befestigt ist.

2. Kraftmess-Hülse (31) nach Anspruch 1,
**dadurch gekennzeichnet,**
**dass** die inneren Kraftübertragungsflächen (38') von mindestens zwei RingSegmenten (33) als Anlage für einen Körper (2) vorgesehen sind, durch den die Hülse (31) an dem Körper (2) zentriert gehalten ist.

3. Kraftmess-Hülse (31) nach Anspruch 1 oder 2,
**dadurch gekennzeichnet,**
**dass** bei einer geraden Anzahl von Segmenten (33) diese paarweise fluchtend und gegenüberliegend zueinander und bei einer ungeraden Anzahl von Segmengen (33) diese in einem Winkel zueinander von 360° geteilt durch die Anzahl der Segmente (33) angeordnet sind.

4. Kraftmess-Hülse (31) nach einem der vorgenannten Ansprüche,
**dadurch gekennzeichnet,**
**dass** der innere Querschnitt der Hülse (31) mehreckig, rund oder polygon ausgebildet ist.

5. Kraftmess-Einrichtung (21) mit einem Gestell (1), mit enem an dem Gestell (1) abgestützten Körper (2) und mit einer den Körper (2) umgreifenden Kraftmess-Hülse (31), nach einem der vorherigen Ansprüche
**dadurch gekennzeichnet,**
**dass** die Kraftmess-Hülse (31) zwischen dem Körper (2) und einer Lagerschale (4 oder 5) eines Umlenkrades (6) oder Zahnrades (7) angeordnet ist, dass die Ausnehmung (36) der Hülse (31) in einer senkrecht zu dem Körper (2) ausgerichteten Ebene angeordnet sind, und dass zwischen der Hülse (31) und dem Körper (2) oder zwischen der Hülse (31) und dem Umlenkrad (6) eine triebliche Wirkverbindung, vorgesehen isf, durch die ein Drehmoment zwischen dem Körper (2) und der Hülse (31) oder zwischen der Hülse (31) und dem Umlenkrad (6) oder dem Zahnrad (7) übertragbar ist.

6. Kraftmess-Einrichtung nach Anspruch 5,
**dadurch gekennzeichnet,**
**dass** die Außenkontur des Körpers (2) und die Innenkontur der Hülse (11 oder 31) korrespondieren und als Spielpassung mit geringer Toleranz ausgestaltete sind und dass die Konturen des Körpers (2) rund der Hülse (11 oder 31) rund, mehreckig oder polygon ausgestaltet sind.

## Claims

1. A force-measuring sleeve (31) having at least inner and outer force-transmitting areas (38, 39) extending concentrically to the longitudinal axis (32) of the sleeve (31), **characterized in that** at least two ring segments (33) are provided at both of the free front ends (34, 35) of the sleeve (31), the ring segments (33) extending respectively concentrically to the longitudinal axis (32) of the sleeve (31) and forming force-transmitting areas (38, 39), which are arranged in pairs concentrically to each other, **characterized in that** a recess (36) is worked into the free front ends (40) of the segments (33), preferably respectively concentrically, wherein the front ends (40) are facing a circumferential direction of the sleeve (31), and **characterized in that** at least one strain gauge (10) is mounted to the ground (37) and/or the wall (37') of the respective recess (36).

2. The force-measuring sleeve (31) of claim 1 **characterized in that** the inner force-transmitting areas (38) of at least two ring segments (33) provide support for a body (2), the support holding the sleeve (31) to the body (2) in a centered manner.

3. The force-measuring sleeve (31) of claim 1 or 2 **characterized in that** the segments (33), if an even number of segments (33) is provided, are arranged aligned in pairs and oppositely to each other, and the segments (33), if an uneven number of segments (33) is provided, are arranged at an angle of 360° relative to each other divided by the number of the segments (33).

4. The force-measuring sleeve (31) of one of the preceding claims, **characterized in that** the inner cross section of the sleeve (31) is formed of a plurality of corners, is round, or is formed as a polygon.

5. A force-measuring device (21) having a frame (1), a body (2) supported by the frame (1), and a force-measuring sleeve (31) according to one of the preceding claims which surrounds the body (2), **characterized in that** the force-measuring sleeve (31) is arranged between the body (2) and a bearing shell (4 or 5) of an idler pulley (6), or of a gear (7), **characterized in that** the recess (36) of the sleeve (31) is arranged in a plane perpendicular to the body (2), and **characterized in that** between the sleeve (31) and the body (2), or between the sleeve (31) and the idler pulley (6), an operational action connection is provided by which torque between the body (2) and the sleeve (31), or between the sleeve (31) and the idler pulley (6), or the gear (7), can be transmitted.

6. The force-measuring device of claim 5 **characterized in that** the outer contour of the body (2) and the inner contour of the sleeve (11 or 31) correspond to each other and are formed as a clearance fit having a small tolerance, and **characterized in that** contours of the body (2) and the sleeve (11 or 31) are formed round, with a plurality of corners, or as a polygon.

## Revendications

1. Douille de mesure de force (31) comprenant au moins une surface de transfert de force intérieure et une surface de transfert de force extérieure (38, 39), lesquelles s'étendent concentriquement à l'axe longitudinal (32) de la douille (31),
**caractérisée en ce**
**qu'**au moins deux segments annulaires (33) sont fixés aux deux côtés frontaux libres (34, 35) de la douille (31), lesquels segments annulaires s'étendent respectivement concentriquement à l'axe longitudinal (32) de la douille (31) et sont formés par les surfaces de transfert de force (38, 39) concentriques les unes par rapport aux autres par paires, en ce qu'un évidement (36) est intégré, de préférence à chaque fois de manière centrée, dans les surfaces frontales libres (40), tournées dans la direction périphérique de la douille (31), des segments (33), et en ce qu'au moins une jauge extensométrique (10) est fixée au fond (37) et/ou à la paroi (37') de l'évidement (36) respectif.

2. Douille de mesure de force (31) selon la revendication 1,
**caractérisée en ce que**
les surfaces de transfert de force intérieures (38) sont produites par au moins deux segments annulaires (33) en tant que butée pour un corps (2), au moyen desquels la douille (31) est retenue de manière centrée sur le corps (2).

3. Douille de mesure de force (31) selon la revendication 1 ou 2,
**caractérisée en ce que**,
dans le cas d'un nombre pair de segments (33), ceux-ci sont disposés par paires en alignement et de manière opposée les uns aux autres et, dans le cas d'un nombre impair de segments (33), ceux-ci sont disposés suivant un angle les uns par rapport aux autres de 360° divisés par le nombre des segments (33).

4. Douille de mesure de force (31) selon l'une quelconque des revendications précédentes,
**caractérisée en ce que**
la section transversale intérieure de la douille (31) est réalisée de manière à présenter plusieurs angles, de manière ronde ou de manière polygonale.

5. Dispositif de mesure de force (21) comprenant un bâti (1), comprenant un corps (2) supporté sur le bâti (1) et comprenant une douille de mesure de force (31), venant en prise autour du corps (2), selon l'une quelconque des revendications précédentes,
**caractérisé en ce que**
la douille de mesure de force (31) est disposée entre le corps (2) et un coussinet de palier (4 ou 5) d'une roue de renvoi (6) ou d'une roue dentée (7), **en ce que** les évidements (36) de la douille (31) sont disposés dans un plan orienté perpendiculairement au corps (2), et **en ce qu'**une liaison fonctionnelle par entraînement est prévue entre la douille (31) et le corps (2) ou entre la douille (31) et la roue de renvoi (6), au moyen de laquelle liaison fonctionnelle un couple peut être transféré entre le corps (2) et la douille (31) ou entre la douille (31) et la roue de renvoi (6) ou la roue dentée (7).

6. Dispositif de mesure de force selon la revendication 5,
**caractérisé en ce que**
le contour extérieur du corps (2) et le contour intérieur de la douille (11 ou 31) correspondent l'un à l'autre et sont configurés selon un ajustement avec jeu à faible tolérance, et **en ce que** les contours du corps (2) et de la douille (11 ou 31) sont configurés de manière ronde, de manière à présenter plusieurs angles ou de manière polygonale.
